# EUROPEAN PATENT SPECIFICATION

(11) **EP 4 258 375 B1**
(45) Date of publication and mention of the grant of the patent: **26.11.2025**
(21) Application number: 22887716.3
(22) Date of filing: 28.10.2022
(51) Int. Cl.: H01M 4/04, H01M 4/139, B01F 23/50, B01F 27/82, B01F 35/21, B01F 35/213

(54) **APPARATUS AND METHOD FOR PREPARATION OF ELECTRODE SLURRY**
VORRICHTUNG UND VERFAHREN ZUR HERSTELLUNG EINER ELEKTRODENAUFSCHLÄMMUNG
APPAREIL ET PROCÉDÉ DE PRÉPARATION D'UNE SUSPENSION D'ÉLECTRODE

(30) Priority: 28.10.2021 KR 20210145344
(43) Date of publication of application: 11.10.2023
(73) Proprietor: LG Energy Solution, Ltd., Seoul 07335 (KR)
(72) Inventor: KIM, Yonghan, Daejeon 34122 (KR); TAKEUCHI, Takashi, Daejeon 34122 (KR); KO, Hyeon Min, Daejeon 34122 (KR); LEE, Sora, Daejeon 34122 (KR); HAN, Seungmi, Daejeon 34122 (KR)
(74) Representative: Goddar, Heinz J.
(86) International application number: PCT/KR2022/016744
(87) International publication number: WO 2023/075521

(56) References cited:
- EP-A1- 3 495 786
- WO-A1-2016/152876
- JP-A- 2001 060 459
- JP-A- 2002 348 119
- JP-A- 2007 005 238
- JP-A- H07 103 865
- JP-A- H07 103 865
- KR-A- 20080 095 463
- KR-A- 20080 095 463
- KR-A- 20190 086 890
- KR-B1- 101 856 483
- KR-B1- 102 069 461
- US-A1- 2021 131 929

## Description

### [Technical Field]

The present invention relates to an apparatus and method for manufacturing slurry for an electrode. Specifically, the present invention relates to an apparatus and method for manufacturing slurry for an electrode, which are capable of inspecting, in real time, a solid content contained in slurry for an electrode and quality of the slurry for an electrode.

### [Background Art]

Unlike primary batteries, secondary batteries may be rechargeable and have small scales and high capacities. Recently, research and development have been actively conducted on secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by interposing a separator between sheet-shaped positive and negative electrodes coated with active materials and winding the stack, a stack-type electrode assembly made by sequentially stacking a plurality of positive and negative electrodes in a state in which separators are interposed between the plurality of positive and negative electrodes, and a stack/folding-type electrode assembly made by winding stack-type unit cells by using long separation films.

The electrode is made by coating an electrode current collector with electrode slurry. However, there is a problem in that the performance and lifespan of the battery are degraded by moisture remaining in the electrode slurry.

Therefore, there is a need for an apparatus for manufacturing slurry for an electrode, which is capable of measuring, in real time, moisture remaining in the electrode slurry and preventing a deterioration in performance and lifespan of the battery.
KR 2008 009 5463 A discloses an apparatus for manufacturing an electrode slurry comprising a sampling unit that collects an electrode slurry via a transfer unit from a mixing part to a plate of a weight measurement unit. The weight measurement unit further comprises a drying part for drying the sampled slurry to carry out weight measurements before and after drying the sample. The weight calculation is output to a display device to adjust the supply amount of solvent.
JP H07103865 A discloses a weight measurement unit comprising a cleaning mechanism involving injecting a washing liquid and steam.

### [Detailed Description of the Invention]

### [Technical Problem]

The present invention has been made in an effort to solve the above-mentioned problems, and an object of the present invention is to provide an apparatus and method for manufacturing slurry for an electrode, which are capable of measuring and adjusting, in real time, a moisture content or solid content contained in slurry for an electrode before the slurry for an electrode is supplied to a subsequent process after the slurry for an electrode is manufactured.

### [Technical Solution]

One embodiment of the present specification provides an apparatus for manufacturing slurry for an electrode as disclosed in claim 1, the apparatus including: a mixing part configured to manufacture slurry for an electrode by mixing an electrode active material, a conductive material, a binder, and a solvent; a flow path configured to sample the slurry for an electrode from the mixing part; a weight measurement part configured to measure a weight of a sample of the slurry for an electrode; a washing part configured to wash an interior of the weight measurement part; and a gas discharge part configured to circulate air in the weight measurement part, wherein the flow path is provided as a plurality of flow paths provided along a height of the mixing part, and each of the flow paths moves the sample of the slurry for an electrode to the weight measurement part, and
wherein the weight measurement part is provided as one or more stacked weight measurement parts, and each of the weight measurement parts measures the weight of the sample of the slurry for an electrode supplied from each of the flow paths.

In the embodiment of the present specification, the weight measurement part may include a drying part configured to dry the sample by supplying heat to the sample.

Another embodiment of the present specification provides a method of manufacturing slurry for an electrode utilizing the apparatus of the invention as disclosed in claim 10, the method including: preparing slurry for an electrode by mixing an electrode active material, a conductive material, a binder, and a solvent; sampling, by a weight measurement part, a small amount of slurry for an electrode and then measuring a weight of the sampled slurry sample for an electrode; and removing the slurry sample for an electrode and then washing the weight measurement part.
Further embodiments are disclosed in the dependent claims.[Advantageous Effects]

According to the apparatus and method for manufacturing slurry for an electrode according to the embodiment of the present invention, it is possible to control the slurry for an electrode and the quality of the battery by measuring or adjusting, in real time, the moisture content or solid content contained in the slurry for an electrode before the slurry for an electrode is supplied to a subsequent process after the slurry for an electrode is manufactured.

### [Brief Description of Drawings]

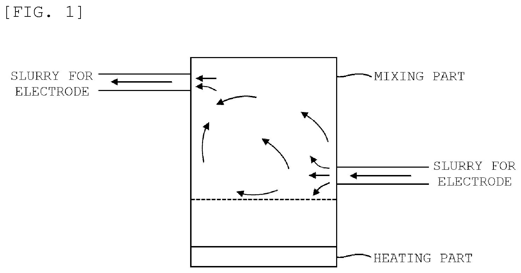

FIG. 1 is a cross-sectional view illustrating an electrode slurry manufacturing apparatus in the related art.
FIG. 2 is a side view illustrating an apparatus for manufacturing slurry for an electrode
FIG. 3 is a cross-sectional view illustrating a weight measurement part
FIG. 4 is a side view illustrating an apparatus for manufacturing slurry for an electrode according to the present invention.

### [Explanation of Reference Numerals and Symbols]

- 100:: Apparatus for manufacturing slurry for electrode
- 10:: Mixing part
- 20:: Flow path
- 30:: Weight measurement part
- 31:: Drying part
- 32:: Plate
- 40:: Washing part
- 50:: Gas discharge part

### [Best Mode]

Hereinafter, the present invention will be described in detail with reference to the drawings. However, the drawings are intended to illustratively describe the present invention, and the scope of the present invention is not limited by the drawings.

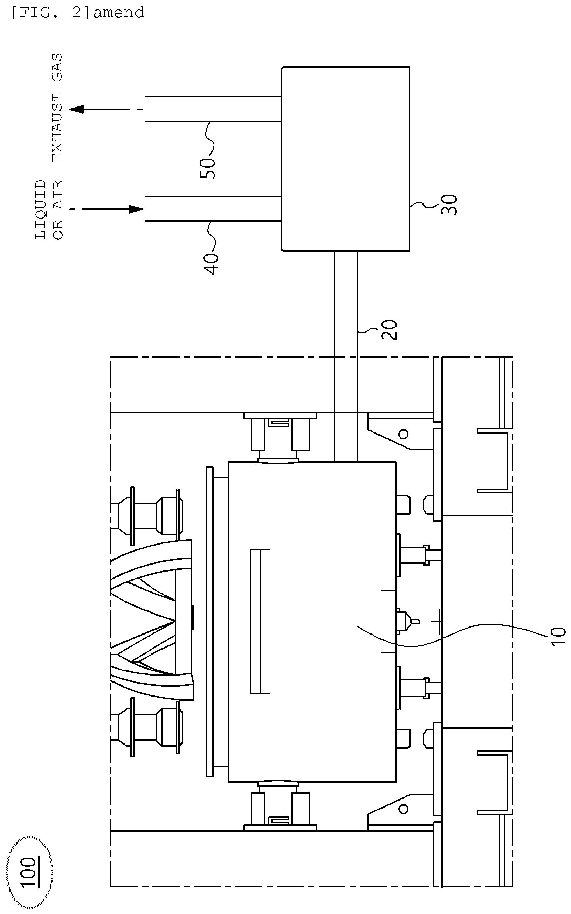

FIG. 2 is a side view illustrating an apparatus 100 for manufacturing slurry for an electrode

The apparatus 100 for manufacturing slurry for an electrode may include a mixing part 10, a flow path 20, a weight measurement part 30, a washing part 40, and a gas discharge part 50.

The mixing part 10 may manufacture the slurry for an electrode by mixing an electrode active material, a conductive material, a binder, and a solvent. The electrode active material may include any one of a positive electrode active material and a negative electrode active material, and the positive electrode active material may include lithium ions. The negative electrode active material may reversibly absorb/discharge the lithium ions emitted from the positive electrode and allow an electric current to flow through an external circuit. The negative electrode active material may include graphite and silicon.

The conductive material may be used to increase conductivity of the electrode active material, and the solvent may be used to adjust a viscosity of the slurry for an electrode.

The binder may be used to physically stabilize the electrode. The binder may be used to increase a force for bonding the electrode active material and the conductive material to a sheet (current collector), e.g., an aluminum sheet or a copper sheet that is coated with the slurry for an electrode during a subsequent process.

Various electrode active materials, various conductive materials, various binders, and various solvents, which may be used in the technical field, may be used as the electrode active material, the conductive material, the binder, and the solvent. The electrode active material, the conductive material, the binder, and the solvent are not particularly limited in terms of types thereof.

Further, the mixing part 10 may include: a main body (not illustrated) configured to receive and store the electrode active material, the conductive material, the binder, and the solvent; and an agitator (not illustrated) configured to agitate the electrode active material, the conductive material, the binder, and the solvent.

Mixing devices with various shapes, which may be used in the technical field, may be used as the mixing part 10, and the shape of the mixing part 10 is not particularly limited.

The flow path 20 may be used to sample the slurry for an electrode in the mixing part 10. The flow path 20 may be provided to penetrate a lateral surface of the mixing part 10. The lateral surface of the mixing part 10 may mean a surface positioned in parallel with the gravitational direction, i.e., one of all the surfaces perpendicular to upper and lower surfaces of the mixing part 10.

The flow path 20 may transfer a small amount of slurry for an electrode, which is stored in the mixing part 10, to the weight measurement part 30. Further, the flow path 20 may transfer the slurry sample for an electrode, on which the weight measurement part 30 has completely performed the measurement, back to the mixing part 10. That is, the flow path 20 may extend from the lateral surface of the mixing part 10 to the weight measurement part 30. The flow path 20 may be provided as one or more flow paths 20.

Further, the flow path 20 may include one of or both a conveyance screw and a pump.

In case that the apparatus 100 for manufacturing slurry for an electrode has two flow paths 20, one flow path 20 may transfer the slurry for an electrode from the mixing part 10 to the weight measurement part 30, and the other flow path 20 may transfer the slurry for an electrode from the weight measurement part 30 to the mixing part 10. In this case, the means of the two flow paths 20 for transferring the slurry for an electrode may be identical to each other as the conveyance screw or the pump or different from each other as a conveyance screw-pump or a pump-conveyance screw.

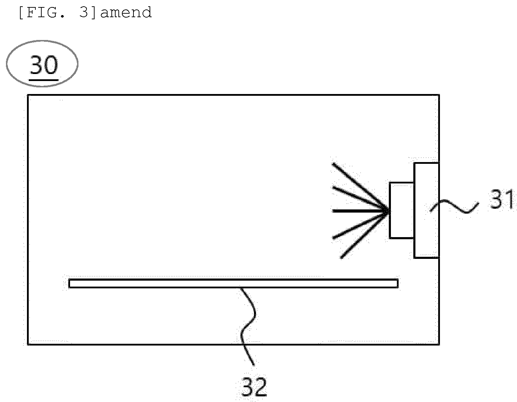

FIG. 3 is a cross-sectional view illustrating the weight measurement part 30

The weight measurement part 30 may measure a weight of a sample of the slurry for an electrode. The weight measurement part 30 may measure a weight of the sample by mounting the sample of the slurry for an electrode, which is transferred through the flow path 20, on a plate 32.

The weight measurement part 30 may measure one of or both a weight of the sample supplied from the flow path 20 and a weight of the sample measured after the sample is dried. Therefore, the weight measurement part 30 may include a drying part 31.

The drying part 31 may dry the sample by supplying heat to the sample stored in the weight measurement part 30. The drying part 31 may dry the sample by raising a temperature in the weight measurement part 30. In this case, the drying part 31 may raise the internal temperature of the weight measurement part 30 to a temperature of 5°C to 300°C. Particularly, the drying part 31 may raise the internal temperature of the weight measurement part 30 to a temperature of 20°C to 200°C.

Alternatively, the drying part 31 may dry the sample by supplying high-temperature air to the sample stored in the weight measurement part 30. The drying part 31 may include: a heating part (not illustrated) configured to produce high-temperature air by heating air; and a spray part (not illustrated) configured to spray the high-temperature air to the sample and into the weight measurement part 30.

The weight measurement part 30 may calculate the percentage of a weight measured before the sample is dried and a weight measured after the sample is dried. Therefore, the weight measurement part 30 may calculate a ratio between a solid material and the solvent contained in the slurry for an electrode. In this case, the solid materials may include the electrode active material, the conductive material, and the binder. In this case, the calculation may be performed on the basis of ((weight measured before sample is dried) - (weight measured after sample is dried))/(weight measured before sample is dried) X 100.

The percentage of weights before/after drying of the slurry for an electrode manufactured by the apparatus 100 for manufacturing slurry for an electrode may be 10% to 90%. In particular, the percentage of weights before/after drying of the slurry for an electrode may be 20% to 80%. When the percentage of weights before/after drying of the slurry for an electrode is less than 10%, a ratio of the solid material contained in the slurry for an electrode is high, which makes it difficult to perform control at the time of applying the slurry for an electrode onto a conductor during a subsequent process. When the percentage of weights before/after drying of the slurry for an electrode is more than 90%, a ratio of the solvent contained in the slurry for an electrode is high, which makes it difficult to manufacture the electrode with the high-performance.

The apparatus 100 for manufacturing slurry for an electrode may include a display part (not illustrated). The display part may display one or more of the weights of the sample measured and calculated by the weight measurement part 30 before and after the sample is dried and the percentage of the weights. A display device, which visually displays data used in the technical field, may be used as the display part. The display device is not particularly limited. For example, the display part may include an LCD, an LED, a touch screen, or the like.

The apparatus 100 for manufacturing slurry for an electrode may include any one of or both an input part (not illustrated) and a control part (not illustrated).

The input part may allow a user to arbitrarily input the supply amount of the electrode active material, the conductive material, the binder, and the solvent and a mixing speed of the mixing part 10. Further, in case that the display part according to the present invention is provided as a touch screen, the display part may also serve as the input part.

The control part receives data related to one or more of the weight measured before the sample is dried, the weight measured after the sample is dried, and the percentage of the weights of the sample from the weight measurement part 30, and then the control part may automatically adjust the supply amount of the electrode active material, the conductive material, the binder, and the solvent and the mixing speed of the mixing part 10.

The control part may store reference values related to one or more of the weight measured before the sample is dried, the weight measured after the sample is dried, and the percentage of the weights of the sample. The control part may compare the data transmitted from the weight measurement part 30 with a pre-stored reference value and control the supply amount of the electrode active material, the conductive material, the binder, and the solvent and the mixing speed of the mixing part 10.

For example, the control part may increase the supply amount of the solvent when a percentage reference value of the sample weight of 40% to 80% is stored, and the percentage of the sample weights measured and calculated by the weight measurement part 30 is 20%.

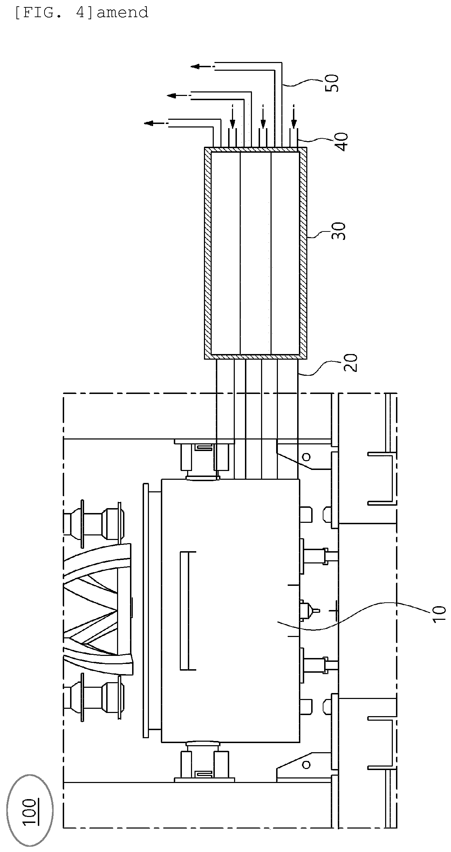

FIG. 4 is a side view illustrating an apparatus 100 for manufacturing slurry for an electrode according to the present invention.

The apparatus 100 for manufacturing slurry for an electrode has a plurality of flow paths 20 provided along a height of the mixing part 10. Further, the apparatus 100 for manufacturing slurry for an electrode may have a plurality of weight measurement parts 30 provided to be stacked. In the apparatus 100 for manufacturing slurry for an electrode, the flow paths 20 may correspond in number to the weight measurement parts 30. The plurality of flow paths 20 may be connected to the single weight measurement part 30. That is, the flow paths 20 may extract the samples of the slurry for an electrode in accordance with the heights of the mixing part 10. The weight measurement part 30 may measure the weights of the slurry for an electrode in accordance with the heights of the mixing part 10.

In this case, in case that there is a deviation between the weight measured before the sample is dried, the weight measured after the sample is dried, and the percentage of the weights of the sample measured by the plurality of weight measurement parts 30, the control part determines that the mixtures of the slurry for an electrode are not uniform in accordance with the heights of the mixing part 10, and then the control part may control the mixing speed of the mixing part 10.

The washing part 40 may wash the interior of the weight measurement part 30. The washing part 40 may wash the weight measurement part 30 while spraying a washing liquid and air. The washing part 40 may detach the solid material remaining on the weight measurement part 30 by spraying the washing liquid and air at a high pressure. Further, the washing liquid sprayed from the washing part 40 may contain the material identical to the solvent contained in the slurry for an electrode.

The washing part 40 may include: a movement pipe (not illustrated) configured to receive the washing liquid or air and move the washing liquid or air; and a spray nozzle (not illustrated) configured to receive the washing liquid or air from the movement pipe and spray the washing liquid to one or more of the weight measurement part 30 and the plate. The spray nozzle may be provided as one or more spray nozzles. The spray nozzle may penetrate and be coupled to an outer surface of the movement pipe.

In case that the washing part 40 is configured to wash the weight measurement part 30 or the plate by using the washing liquid, the washing part 40 may further include an air supply part (not illustrated). The air supply part may supply air to the movement pipe, thereby allowing a high-pressure liquid to be sprayed through the spray nozzle.

In the apparatus 100 for manufacturing slurry for an electrode according to the present invention, the washing part 40 may further include a hot-air drying part (not illustrated) to reduce an error caused when the weight measurement part 30 measures the weight of the solid material. The hot-air drying part may evaporate the liquid by supplying heated air to the weight measurement part 30.

The apparatus 100 for manufacturing slurry for an electrode according to the present invention may further include a plate storage part (not illustrated).

The plate storage part may store a plurality of plates. The plate storage part may be positioned at one side of the weight measurement part 30 and supply the plate into the weight measurement part 30 or replace the plate. Therefore, the plate storage part and the weight measurement part 30 may each include a through port at one side so that the plate may move. The through port of the plate storage part and the through port of the weight measurement part 30 may correspond in size and position to each other.

Further, the through port may include an opening/closing part, and the opening/closing part may operate in conjunction with the washing part 40. Therefore, the opening/closing part is closed when the weight measurement part 30 measures the weight of the slurry sample for an electrode. The opening/closing part is opened to replace the plate before or after the washing part 40 washes the interior of the weight measurement part 30 or when the washing part 40 washes the interior of the weight measurement part 30 after the measurement of the weight is completed.

The gas discharge part 50 may circulate the air in the weight measurement part 30. The gas discharge part 50 may lower a temperature in the weight measurement part 30 by discharging the high-pressure air, which is sprayed from the washing part 40, to the outside or discharging the heated air to the outside by the hot-air drying part. Further, the gas discharge part 50 may discharge the residual solid material, which is detached by the washing part 40, to the outside.

In the embodiment, the gas discharge part 50 may be coupled, in the form of a hollow pipe, to one surface of the weight measurement part 30. Further, the gas discharge part 50 may include a blower fan (not illustrated) configured to discharge air in the weight measurement part 30 to the outside.

In case that the apparatus 100 for manufacturing slurry for an electrode according to the present invention includes a plurality of weight measurement parts 30, the gas discharge part 50 may be provided for each of the weight measurement part 30.

Further, the apparatus 100 for manufacturing slurry for an electrode according to the present invention may further include an opening/closing part (not illustrated) between the weight measurement part 30 and the gas discharge part 50. When the weight measurement part 30 measures the weight of the slurry for an electrode or the solid material, the opening/closing part is closed to prevent the air in the weight measurement part 30 from being discharged to the outside. Further, after the washing part 40 washes the weight measurement part 30 or the plate, the opening/closing part is opened, such that the air may be discharged to the outside. The opening/closing part may be controlled by the control part.

A method of manufacturing slurry for an electrode according to the present invention includes step S10 of manufacturing the slurry for an electrode, step S20 of measuring the weight of the slurry sample for an electrode, and step S30 of washing the weight measurement part.

Step S10 of manufacturing the slurry for an electrode includes manufacturing the slurry for an electrode by mixing the electrode active material, the conductive material, the binder, and the solvent.

The conductive material is not particularly limited as long as the conductive material has conductivity without causing a chemical change in battery. Representative examples of the conductive material may include one material selected from a group consisting of natural graphite, artificial graphite, carbon black, acetylene black, Ketjen black, channel black, furnace black, lamp black, thermal black, carbon fiber, metal fiber, fluorocarbon, aluminum, nickel powder, zinc oxide, potassium titanate, titanium oxide, and polyphenylene derivative, or a mixture of two or more of the above-mentioned material.

As the binder, there may be used various types of binder polymers such as polyvinylidenefluoride-hexafluoropropylene copolymer (PVDF-co-HFP), polyvinylidenefluoride, polyacrylonitrile, polymethylmethacrylate, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluorine rubber, polyacrylic acid, and polymers made by substituting hydrogen of the above-mentioned material with Li, Na, Ca, or the like, or various copolymers.

The solvent may contain any one of N-methylpyrrolidone (NMP), dimethylisosorbide (DMI), dimethyl sulfoxide (DMSO), and methyl sulfoxide.

Step S20 of measuring the weight of the slurry sample for an electrode includes sampling, by the weight measurement part, the slurry for an electrode, and measuring a weight of the slurry sample for an electrode.

Step S20 of measuring the weight of the slurry sample for an electrode may include step S21 of sampling the slurry for an electrode and then measuring a weight of the sampled slurry for an electrode, and step S22 of drying the slurry sample for an electrode and then measuring a weight of the dried slurry sample for an electrode. Step S20 of measuring the weight of the slurry sample for an electrode may include inspecting quality of the slurry for an electrode by measuring the amount of the electrode active material contained in the slurry for an electrode.

That is, step S20 of measuring the weight of the slurry sample for an electrode may include measuring the weights measured before and after the slurry sample for an electrode is dried, and computing whether a value of the amount of the electrode active material contained in the slurry for an electrode is a pre-stored reference value or more.

For example, step S20 of measuring the weight of the slurry sample for an electrode may include measuring the weights measured before and after the slurry sample for an electrode is dried, and decreasing the supply amount of the binder or solvent for an electrode to the mixing part or increasing the supply amount of the electrode active material when the amount of the electrode active material in the slurry for an electrode is calculated as being less than 95 wt%.

Step S30 of washing the weight measurement part includes washing the weight measurement part after removing the slurry sample for an electrode on which the measurement is completely performed.

In this case, the slurry sample for an electrode may be discharged and discarded or resupplied to the mixing part through the flow path.

Step S30 of washing the weight measurement part may include step S31 of spraying one of or both a washing liquid and air to the inner wall of the weight measurement part, and step S32 of discharging one of or both the washing liquid and air, which have been used to wash the inner wall of the weight measurement part, to the outside. In this case, the washing liquid and air may be sprayed at a high pressure.

In case that the washing liquid is used in step S30 of washing the weight measurement part, step S30 of washing the weight measurement part may include step S31-1 of drying the interior of the weight measurement part, and step S32-1 of discharging the evaporated washing liquid to the outside.

Further, in case that the slurry for an electrode remaining in the weight measurement part is removed by the sprayed air in step S30 of washing the weight measurement part, step S30 of washing the weight measurement part may include step S32-2 of discharging the air, which has been used for washing, and the residual slurry for an electrode, which is detached by the air, to the outside of the weight measurement part.

Step S30 of washing the weight measurement part may include washing the weight measurement part by spraying one of or both the washing liquid and air to the plate included in the weight measurement part and configured to mount the slurry sample for an electrode, or washing the weight measurement part by replacing the plate.

While the present invention has been described above with reference to the exemplary embodiments, it may be understood by those skilled in the art that the present invention may be variously modified and changed without departing from the scope of the present invention disclosed in the claims.

## Claims

1. An apparatus (100) for manufacturing slurry for an electrode, the apparatus (100) comprising:
a mixing part (10) configured to manufacture slurry for an electrode by mixing an electrode active material, a conductive material, a binder, and a solvent;
a flow path (20) configured to sample the slurry for an electrode from the mixing part (10);
a weight measurement part (30) configured to measure a weight of a sample of the slurry for an electrode;
a washing part (40) configured to wash an interior of the weight measurement part (30); and
a gas discharge part (50) configured to circulate air in the weight measurement part (30),
wherein the flow path (20) is provided as a plurality of flow paths (20) provided along a height of the mixing part (10), and each of the flow paths (20) moves the sample of the slurry for an electrode to the weight measurement part (30), and
wherein the weight measurement part (30) is provided as one or more stacked weight measurement parts (30), and each of the weight measurement parts (30) measures the weight of the sample of the slurry for an electrode supplied from each of the flow paths (20).

2. The apparatus (100) of claim 1, wherein the weight measurement part (30) comprises a plate (32) configured to mount the sample.

3. The apparatus (100) of claim 2, further comprising:
a plate storage part positioned at one side of the weight measurement part (30) and configured to store a plurality of plates (32), the plate storage part being configured to supply the plate (32) to the weight measurement part (30) and replace the plate (32).

4. The apparatus (100) of claim 1, wherein the weight measurement part (30) comprises a drying part (31) configured to dry the sample by supplying heat to the sample, and
wherein the weight measurement part (30) measures a weight of the sample before the sample is dried and a weight of the sample after the sample is dried.

5. The apparatus (100) of claim 4, further comprising:
a display part configured to display one or more of the weight of the sample measured before the sample is dried, the weight of the sample measured after the sample is dried, and a percentage of the weights of the sample measured before and after the sample is dried.

6. The apparatus (100) of claim 1, wherein the flow path (20) moves the slurry for an electrode to the weight measurement part (30) by any one of a conveyance screw and a pump.

7. The apparatus (100) of claim 1, further comprising:
a control part configured to store a reference value related to the weight of the sample of the slurry for an electrode, the control part being configured to adjust one or more of the supply amount of one or more of the electrode active material, the conductive material, the binder, and the solvent to the mixing part (10) and a mixing speed of the mixing part (10) when the weight of the sample measured by the weight measurement part (30) is less than the reference value.

8. The apparatus (100) of claim 1, wherein the washing part (40) washes the weight measurement part (30) by spraying one of or both a washing liquid and air into the weight measurement part (30).

9. The apparatus (100) of claim 8, further comprising:
a hot-air drying part configured to evaporate the washing liquid by supplying heated air to the weight measurement part (30).

10. A method of manufacturing slurry for an electrode utilizing the apparatus of claim 1, the method comprising:
preparing slurry for an electrode by mixing an electrode active material, a conductive material, a binder, and a solvent;
sampling, by a weight measurement part (30), a small amount of slurry for an electrode and then measuring a weight of the sampled slurry sample for an electrode; and
removing the slurry sample for an electrode and then washing the weight measurement part (30).

11. The method of claim 10, wherein the measuring of the weight comprises:
sampling the slurry for an electrode and then measuring the weight of the sampled slurry for an electrode; and
drying the sampled slurry for an electrode and then measuring the weight of the dried slurry for an electrode.

12. The method of claim 10, wherein the washing of the weight measurement part (30) comprises:
spraying one of or both a washing liquid and air to an inner wall of the weight measurement part (30); and
discharging one of or both the washing liquid and air, which have been used to wash the inner wall of the weight measurement part (30), to the outside.

13. The method of claim 10, wherein the washing of the weight measurement part (30) comprises washing the weight measurement part (30) by spraying one of or both a washing liquid and air to a plate (32) included in the weight measurement part (30) and configured to mount the slurry sample for an electrode.

14. The method of claim 10, wherein the washing of the weight measurement part (30) comprises replacing a plate (32) included in the weight measurement part (30) and configured to mount the slurry sample for an electrode.

## Patentansprüche

1. Vorrichtung (100) zum Herstellen einer Aufschlämmung für eine Elektrode, wobei die Vorrichtung (100) umfasst:
einen Mischteil (10), der konfiguriert ist, um eine Aufschlämmung für eine Elektrode durch Mischen eines Elektrodenaktivmaterials, eines leitfähigen Materials, eines Bindemittels und eines Lösungsmittels herzustellen;
einen Strömungsweg (20), der konfiguriert ist, um die Aufschlämmung für eine Elektrode aus dem Mischteil (10) zu entnehmen;
einen Gewichtsmessteil (30), der konfiguriert ist, um ein Gewicht einer Probe der Aufschlämmung für eine Elektrode zu messen;
einen Waschteil (40), der konfiguriert ist, um ein Inneres des Gewichtsmessteils (30) zu waschen; und
einen Gasabgabeteil (50), der konfiguriert ist, um Luft in dem Gewichtsmessteil (30) zu zirkulieren,
wobei der Strömungsweg (20) als eine Vielzahl von Strömungswegen (20) bereitgestellt ist, die entlang einer Höhe des Mischteils (10) bereitgestellt sind, und jeder der Strömungswege (20) die Probe der Aufschlämmung für eine Elektrode zu dem Gewichtsmessteil (30) bewegt, und
wobei der Gewichtsmessteil (30) als ein oder mehrere gestapelte Gewichtsmessteile (30) bereitgestellt ist, und jeder der Gewichtsmessteile (30) das Gewicht der Probe der Aufschlämmung für eine Elektrode misst, die von jedem der Strömungswege (20) zugeführt wird.

2. Vorrichtung (100) nach Anspruch 1, wobei der Gewichtsmessteil (30) eine Platte (32) umfasst, die konfiguriert ist, um die Probe zu montieren.

3. Vorrichtung (100) nach Anspruch 2, ferner umfassend:
einen Plattenspeicherteil, der an einer Seite des Gewichtsmessteils (30) positioniert ist und konfiguriert ist, um eine Vielzahl von Platten (32) zu speichern, wobei der Plattenspeicherteil konfiguriert ist, um die Platte (32) dem Gewichtsmessteil (30) zuzuführen und die Platte (32) zu ersetzen.

4. Vorrichtung (100) nach Anspruch 1, wobei der Gewichtsmessteil (30) einen Trocknungsteil (31) umfasst, der konfiguriert ist, um die Probe durch Zuführen von Wärme zu der Probe zu trocknen, und
wobei der Gewichtsmessteil (30) ein Gewicht der Probe, bevor die Probe getrocknet wird, und ein Gewicht der Probe, nachdem die Probe getrocknet wird, misst.

5. Vorrichtung (100) nach Anspruch 4, ferner umfassend:
einen Anzeigeteil, der konfiguriert ist, um eines oder mehrere des Gewichts der Probe, das gemessen wird, bevor die Probe getrocknet wird, des Gewichts der Probe, das gemessen wird, nachdem die Probe getrocknet wird, und eines Prozentsatzes der Gewichte der Probe, die gemessen werden, bevor und nachdem die Probe getrocknet wird, anzuzeigen.

6. Vorrichtung (100) nach Anspruch 1, wobei der Strömungsweg (20) die Aufschlämmung für eine Elektrode zu dem Gewichtsmessteil (30) durch eines von einer Förderschnecke und einer Pumpe bewegt.

7. Vorrichtung (100) nach Anspruch 1, ferner umfassend:
einen Steuerteil, der konfiguriert ist, um einen Referenzwert in Bezug auf das Gewicht der Probe der Aufschlämmung für eine Elektrode zu speichern, wobei der Steuerteil konfiguriert ist, um eines oder mehrere der Zufuhrmenge von einem oder mehreren des Elektrodenaktivmaterials, des leitfähigen Materials, des Bindemittels und des Lösungsmittels zu dem Mischteil (10) und einer Mischgeschwindigkeit des Mischteils (10) einzustellen, wenn das Gewicht der Probe, das durch den Gewichtsmessteil (30) gemessen wird, kleiner als der Referenzwert ist.

8. Vorrichtung (100) nach Anspruch 1, wobei der Waschteil (40) den Gewichtsmessteil (30) durch Sprühen eines oder beider von einer Waschflüssigkeit und Luft in den Gewichtsmessteil (30) wäscht.

9. Vorrichtung (100) nach Anspruch 8, ferner umfassend:
einen Heißlufttrocknungsteil, der konfiguriert ist, um die Waschflüssigkeit durch Zuführen von erwärmter Luft zu dem Gewichtsmessteil (30) zu verdampfen.

10. Verfahren zum Herstellen einer Aufschlämmung für eine Elektrode unter Verwendung der Vorrichtung nach Anspruch 1, wobei das Verfahren umfasst:
Herstellen einer Aufschlämmung für eine Elektrode durch Mischen eines Elektrodenaktivmaterials, eines leitfähigen Materials, eines Bindemittels und eines Lösungsmittels;
Probennehmen, durch einen Gewichtsmessteil (30), einer kleinen Menge einer Aufschlämmung für eine Elektrode und dann Messen eines Gewichts der Probennahme der Aufschlämmungsprobe für eine Elektrode; und
Entfernen der Aufschlämmungsprobe für eine Elektrode und dann Waschen des Gewichtsmessteils (30).

11. Verfahren nach Anspruch 10, wobei das Messen des Gewichts umfasst:
Probennehmen der Aufschlämmung für eine Elektrode und dann Messen des Gewichts der Probennahme der Aufschlämmung für eine Elektrode; und
Trocknen der Probennahme der Aufschlämmung für eine Elektrode und dann Messen des Gewichts der getrockneten Aufschlämmung für eine Elektrode.

12. Verfahren nach Anspruch 10, wobei das Waschen des Gewichtsmessteils (30) umfasst:
Sprühen eines oder beider von einer Waschflüssigkeit und Luft auf eine Innenwand des Gewichtsmessteils (30); und
Abgeben eines oder beider von der Waschflüssigkeit und Luft, die verwendet wurden, um die Innenwand des Gewichtsmessteils (30) zu waschen, nach außen.

13. Verfahren nach Anspruch 10, wobei das Waschen des Gewichtsmessteils (30) das Waschen des Gewichtsmessteils (30) durch Sprühen eines oder beider von einer Waschflüssigkeit und Luft auf eine Platte (32) umfasst, die in dem Gewichtsmessteil (30) enthalten ist und konfiguriert ist, um die Aufschlämmungsprobe für eine Elektrode zu montieren.

14. Verfahren nach Anspruch 10, wobei das Waschen des Gewichtsmessteils (30) das Ersetzen einer Platte (32) umfasst, die in dem Gewichtsmessteil (30) enthalten ist und konfiguriert ist, um die Aufschlämmungsprobe für eine Elektrode zu montieren.

## Revendications

1. Appareil (100) de fabrication d'une suspension épaisse pour une électrode, l'appareil (100) comprenant :
une partie de mélangeage (10) configurée pour fabriquer une suspension épaisse pour une électrode en mélangeant un matériau actif d'électrode, un matériau conducteur, un liant et un solvant ;
un trajet d'écoulement (20) configuré pour prélever la suspension épaisse pour une électrode de la partie de mélangeage (10) ;
une partie de mesure de poids (30) configurée pour mesurer un poids d'un prélèvement de la suspension épaisse pour une électrode ;
une partie de lavage (40) configurée pour laver un intérieur de la partie de mesure de poids (30) ; et
une partie de décharge de gaz (50) configurée pour faire circuler de l'air dans la partie de mesure de poids (30),
dans lequel le trajet d'écoulement (20) est fourni en une pluralité de trajets d'écoulement (20) fournis le long d'une hauteur de la partie de mélangeage (10), et chacun des trajets d'écoulement (20) déplace le prélèvement de la suspension épaisse pour une électrode vers la partie de mesure de poids (30), et
dans lequel la partie de mesure de poids (30) est fournie en une ou plusieurs parties de mesure de poids empilées (30), et chacune des parties de mesure de poids (30) mesure le poids du prélèvement de la suspension épaisse pour une électrode fournie par chacun des trajets d'écoulement (20).

2. Appareil (100) selon la revendication 1, dans lequel la partie de mesure de poids (30) comprend une plaque (32) configurée pour monter le prélèvement.

3. Appareil (100) selon la revendication 2, comprenant en outre :
une partie de stockage de plaques positionnée d'un côté de la partie de mesure de poids (30) et configurée pour stocker une pluralité de plaques (32), la partie de stockage de plaques étant configurée pour fournir la plaque (32) à la partie de mesure de poids (30) et remplacer la plaque (32).

4. Appareil (100) selon la revendication 1, dans lequel la partie de mesure de poids (30) comprend une partie de séchage (31) configurée pour sécher le prélèvement en fournissant de la chaleur au prélèvement, et
dans lequel la partie de mesure de poids (30) mesure un poids du prélèvement avant que le prélèvement soit séché et un poids du prélèvement après que le prélèvement est séché.

5. Appareil (100) selon la revendication 4, comprenant en outre :
une partie d'affichage configurée pour afficher un ou plusieurs poids du prélèvement mesuré avant que le prélèvement soit séché, le poids du prélèvement mesuré après que le prélèvement est séché et un pourcentage des poids du prélèvement mesuré avant que et après que le prélèvement soit séché.

6. Appareil (100) selon la revendication 1, dans lequel le trajet d'écoulement (20) déplace la suspension épaisse pour une électrode vers la partie de mesure de poids (30) par soit une vis de convoyage, soit une pompe.

7. Appareil (100) selon la revendication 1, comprenant en outre :
une partie de commande configurée pour stocker une valeur de référence relative au poids du prélèvement de la suspension épaisse pour une électrode, la partie de commande étant configurée pour régler une ou plusieurs quantités de fourniture d'un ou plusieurs éléments parmi le matériau actif d'électrode, le matériau conducteur, le liant et le solvant à la partie de mélangeage (10) et une vitesse de mélangeage de la partie de mélangeage (10) quand le poids du prélèvement mesuré par la partie de mesure de poids (30) est inférieur à la valeur de référence.

8. Appareil (100) selon la revendication 1, dans lequel la partie de lavage (40) lave la partie de mesure de poids (30) en pulvérisant soit un liquide de lavage, soit de l'air, soit les deux, dans la partie de mesure de poids (30).

9. Appareil (100) selon la revendication 8, comprenant en outre :
une partie de séchage à air chaud configurée pour évaporer le liquide de lavage en fournissant de l'air chauffé à la partie de mesure de poids (30).

10. Procédé de fabrication d'une suspension épaisse pour une électrode utilisant l'appareil selon la revendication 1, le procédé consistant à :
préparer une suspension épaisse pour une électrode en mélangeant un matériau actif d'électrode, un matériau conducteur, un liant et un solvant ;
prélever, par une partie de mesure de poids (30), une petite quantité de suspension épaisse pour une électrode, puis mesurer un poids du prélèvement de suspension épaisse pour une électrode prélevé ; et
retirer le prélèvement de suspension épaisse pour une électrode, puis peser la partie de mesure de poids (30).

11. Procédé selon la revendication 10, dans lequel le mesurage du poids consiste à :
prélever la suspension épaisse pour une électrode, puis mesurer le poids de la suspension épaisse prélevée pour une électrode ; et
sécher la suspension épaisse pour une électrode prélevée, puis mesurer le poids de la suspension épaisse séchée pour une électrode.

12. Procédé selon la revendication 10, dans lequel le lavage de la partie de mesure de poids (30) consiste à :
pulvériser soit un liquide de lavage, soit de l'air, soit les deux, sur une paroi intérieure de la partie de mesure de poids (30) ; et
décharger soit un liquide de lavage, soit l'air, soit les deux, qui ont été utilisés pour laver la paroi intérieure de la partie de mesure de poids (30), vers l'extérieur.

13. Procédé selon la revendication 10, dans lequel le lavage de la partie de mesure de poids (30) consiste à laver la partie de mesure de poids (30) en pulvérisant soit un liquide de lavage, soit de l'air, soit les deux sur une plaque (32) inclue dans la partie de mesure de poids (30) et configurée pour monter le prélèvement de suspension épaisse pour une électrode.

14. Procédé selon la revendication 10, dans lequel le lavage de la partie de mesure de poids (30) consiste à remplacer une plaque (32) inclue dans la partie de mesure de poids (30) et configurée pour monter le prélèvement de suspension épaisse pour une électrode.
